# EUROPÄISCHE PATENTSCHRIFT

(11) **EP 3 549 654 B1**
(45) Veröffentlichungstag und Bekanntmachung des Hinweises auf die Patenterteilung: **05.05.2021**
(21) Anmeldenummer: 19161883.4
(22) Anmeldetag: 11.03.2019
(51) Int. Cl.: B01D 36/00, B01D 29/15, B01D 29/58

(54) **FILTEREINRICHTUNG**
FILTER DEVICE
DISPOSITIF FILTRANT

(30) Priorität: 04.04.2018 DE 102018205069
(43) Veröffentlichungstag der Anmeldung: 09.10.2019
(73) Patentinhaber: Mahle International GmbH, 70376 Stuttgart (DE)
(72) Erfinder: HENSINGER, Heiko, 70599 Stuttgart (DE)
(74) Vertreter: BRP Renaud & Partner mbB Rechtsanwälte Patentanwälte Steuerberater

(56) Entgegenhaltungen:
- WO-A1-2013/083705
- DE-A1-102011 120 653
- DE-A1-102012 013 743
- US-A1- 2008 302 717
- US-A1- 2017 361 249

## Beschreibung

Die vorliegende Erfindung betrifft eine Filtereinrichtung mit einem in Strömungsrichtung nacheinander angeordneten Ringfilterelemente, einem Coaleszer und einem Endabscheider, gemäß dem Oberbegriff des Anspruchs 1. Die Erfindung betrifft außerdem einen Endabscheider für eine derartige Filtereinrichtung.

Aus der US 2016/0258397 A1 ist eine Filtereinrichtung mit in Strömungsrichtung nacheinander angeordnetem Ringfilterelement, Coaleszer und innerem Filterelement bekannt, wobei das innere Filterelement üblicherweise als Endabscheider dient. Der Coaleszer ist hierbei radial innerhalb des Ringfilterelements angeordnet, während der Endabscheider radial innerhalb des Coaleszers angeordnet ist.

Aus der DE 10 2011 120 653 A1 ist eine gattungsgemäße Filtereinrichtung mit einem in Strömungsrichtung nacheinander angeordneten Ringfilterelement, einem Coaleszer sowie einem Endabscheider bekannt, wobei der Coaleszer, das Ringfilterelement und der Endabscheider koaxial angeordnet sind.

Aus der DE 10 2012 013 743 A1 ist eine Wasserabscheidevorrichtung bekannt. Die Wasserabscheidevorrichtung weist ein als Hohlkörper ausgestaltetes Coaleszermedium zur Coaleszenz von Wassertröpfchen aus dem flüssigen Kohlenwasserstoff und in Strömungsrichtung des flüssigen Kohlenwasserstoffs hinter dem Coaleszermedium in dessen Innerem oder dieses umgebend ein als Hohlkörper gestaltetes hydrophobes, für den flüssigen Kohlenwasserstoff durchlässiges Trennmedium zur Abscheidung von im flüssigen Kohlenwasserstoff enthaltenen Wassertröpfchen, auf.

Aus der WO 2012/083705 A1 ist eine weitere Filtereinrichtung bekannt. Nachteilig bei den aus dem Stand der Technik bekannten Filtereinrichtungen ist, dass sich bei einer jeweils zylindrischen Ausbildung des Ringfilterelements, des Coaleszers und des Endabscheiders ein Coaleszergewebe im Betrieb der Filtereinrichtung druckbedingt verformen und beispielsweise an einen radial innen dazu angeordneten Endabscheider anlegen kann. Hierdurch wird ein für die Wasserabscheidung erforderlicher Ringspalt geschlossen und dadurch die Wasserabscheidung zumindest erschwert. Der ebenfalls zylindrisch und damit im Querschnitt rund ausgeführte Endabscheider weist im Großen und Ganzen dieselben Nachteile auf, nämlich ein druckbedingtes Verformen des Endabscheidergewebes, welches sich dann an einen radial innen angeordneten Funktionsträger bzw. ein Steigrohr anlegt und dadurch durchhängt, wodurch sich Wassertaschen bilden können, die eine zuverlässige Wasserabscheidung ebenfalls erschweren. Die vorliegende Erfindung beschäftigt sich daher mit dem Problem, für eine Filtereinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals einen Endabscheider im Querschnitt eckig, das heißt als Mehreck, auszubilden mit zwischen zwei jeweils benachbarten Endabscheiderrippen eben gespanntem Endabscheidermaterial. Ein derartiger Endabscheider wird radial innerhalb eines Coaleszers angeordnet, wobei der Coaleszer beispielsweise als Schicht auf einem Material eines Ringfilterelements angeordnet sein kann. Das Ringfilterelement, der Coaleszer und der Endabscheider sind dabei in Strömungsrichtung nacheinander in einem Filtergehäuse einer Filtereinrichtung angeordnet. Das in Umfangsrichtung zwischen zwei benachbarten Endabscheiderrippen eben gespannte Endabscheidermaterial kann eine Taschenbildung und auch ein Anliegen des Endabscheidermaterials an einem radial innerhalb des Endabscheiders angeordneten Dom bzw. Funktionsträger zuverlässig unterbinden, da bei der eckigen Ausführungsform des Endabscheiders mit dem eben gespannten Endabscheidematerial deutlich weniger Spiel vorhanden ist, als bei einem zunächst konvexen Endabscheidermaterial, welches druckbedingt in eine konkave Form fällt. Mit einem derartigen im Querschnitt eckigen, beispielsweise viereckigen, sechseckigen oder achteckigen, Endabscheider, können somit die aus dem Stand der Technik bekannten Nachteile, insbesondere hinsichtlich des Anlegens des Endabscheidermaterials an dem radial innen angeordneten Dom bzw. Funktionsträger zuverlässig vermieden und dadurch eine verbesserte Wasserabscheidung erreicht werden. Dabei sind an einem Außendurchmesser des Coaleszers Coaleszerrippen angeordnet sind.

Erfindungsgemäß sind der Coaleszer und das Ringfilterelement rund ausgebildet, wobei bei montierter Filtereinrichtung zumindest eine Endabscheiderrippe in Umfangsrichtung zwischen zwei Coaleszerrippen liegt und dadurch ein Abstützen des Coaleszermaterials ermöglicht. Das Ringfilterelement bzw. dessen Filtermaterial, welches beispielsweise als Faltenstern ausgeführt ist, wird üblicherweise innen durch eine Coaleszerschicht bzw. einen separaten Coaleszer ergänzt. Durch den Umstand, dass nun die Endabscheiderrippen bei montierter Filtereinrichtung in Umfangsrichtung zwischen zwei benachbarten Coaleszerrippen liegen, kann ein Abstützen des Coaleszermaterials erreicht werden, wodurch insbesondere ein Durchschlagen desselben von einer zuvor konvexen Form in eine nachträglich konkave Form vermieden werden kann. Hierdurch kann insbesondere auch die für ein Abführen bzw. Abscheiden von Wassertröpfen in einem Ringspalt zwischen dem Coaleszer und dem Endabscheider erforderliche Spaltbreite aufrechterhalten werden.

Bei einer weiteren vorteilhaften Ausführungsform der erfindungsgemäßen Filtereinrichtung sind die Endabscheiderrippen an einem Außendurchmesser des Endabscheiders angeordnet. Durch eine Anordnung der Endabscheiderrippen an einem Außendurchmesser kann ein Spannen des Endabscheidermaterials an einem Innendurchmesser erreicht werden, wodurch die außenliegenden Endabscheiderrippen zugleich eine Abstützung für das radial außerhalb dazu angeordnete Coaleszermaterial bildet. Die am Außendurchmesser angeordneten Endabscheiderrippen verhindern dadurch bei einem Durchschlagen des Coaleszermaterials ein vollständiges sich Anlegen desselben an das Endabscheidermaterial und dadurch eine Reduzierung des für die Wasserabscheidung zwischen dem Coaleszer und dem Endabscheider erforderlichen Spalts. Hierdurch kann eine besonders zuverlässige Wasserabscheidung gewährleistet werden.

Bei einer weiteren vorteilhaften Ausführungsform der erfindungsgemäßen Lösung ist der Endabscheider als Sechseck oder als Achteck ausgebildet und weist demzufolge entweder sechs oder acht Endabscheiderrippen auf. Eine sechseckige (Querschnitts-)Form des Endabscheiders ermöglicht bereits ein Spannen des Endabscheidermaterials zwischen zwei benachbarten Endabscheiderrippen, wobei die Ausführungsform als Sechseck im Vergleich zu einer Ausführungsform als Achteck den Vorteil einer größeren Endabscheidermaterialfläche bietet, da der Platz für zwei weitere Endabscheiderrippen bei der sechseckigen Ausführungsform durch Endabscheidermaterial belegt werden kann. Die Ausführungsform des Endabscheiders als Achteck wiederum bietet den Vorteil, dass ein derartiger Endabscheider deutlich druckstabiler ausgebildet ist, da die zwischen zwei benachbarten Endabscheiderrippen gelegene Fläche an Endabscheidermaterial kleiner ist. Hierdurch kann auch eine Verformung des Endabscheidermaterials in den einzelnen Endabscheiderfeldern, das heißt zwischen zwei benachbarten Endabscheiderrippen, reduziert werden.

Zweckmäßig ist die Filtereinrichtung als Ölfilter oder als Dieselkraftstofffilter ausgebildet. Besonders bei einer Ausbildung der Filtereinrichtung als Kraftstofffilter kommt es auf eine zuverlässige und gleichbleibende Wasserabscheidung an, um einen unerwünschten Wassereintrag in eine Brennkraftmaschine und die damit verbundenen Korrosionsprozesse sowie Fehlfunktionen zuverlässig vermeiden zu können. Rein theoretisch kann selbstverständlich die Filtereinrichtung auch als Hydraulikfilter ausgebildet sein.

Die vorliegenden Erfindung beruht weiter auf dem allgemeinen Gedanken, einen Endabscheider für die zuvor beschriebene Filtereinrichtung anzugeben, der im Querschnitt eckig, das heißt als Mehreck, beispielsweise als Dreieck, Viereck, Fünfeck, Sechseck oder Achteck, ausgebildet ist und der zwischen zwei jeweils benachbarten Endabscheiderrippen ein eben gespanntes Endabscheidermaterial aufweist. Ein derartiger erfindungsgemäßer Endabscheider verhindert ein Anlegen des Endabscheidermaterials an einem radial innen gelegenen Dom bzw. Funktionsträger und erhöht dadurch die Wasserabscheiderate, was insbesondere bei Dieselkraftstofffilter von großem Vorteil ist. Durch das zwischen zwei benachbarten Endabscheiderrippen eben gespannte Endabscheidermaterial besitzt dieses deutlich weniger Spiel und kann insbesondere nicht von einer zuvor konvexen in eine druckbedingt nachträglich konkave Form überführt werden und dadurch Wassertaschen bilden.

Erfindungsgemäss sind die Endabscheiderrippen an einem Außendurchmesser des Endabscheiders angeordnet. Eine Anordnung der Endabscheiderrippen an einem Außendurchmesser des Endabscheiders bietet den großen Vorteil, dass diese Endabscheiderrippen im Einbauzustand des Endabscheiders in einer Filtereinrichtung zugleich als Abstützung für ein radial außerhalb dazu angeordneten Coaleszermaterial dienen kann. Die Endabscheiderrippen können dabei Bestandteil einer Endabscheiderzarge sein, welche neben den Endabscheiderrippen auch Endabscheidermehrecke, beispielsweise Sechsecke, aufweist, die die einzelnen Endabscheiderrippen in Umfangsrichtung und in Radialrichtung aussteifen. Eine derartige Endabscheiderzarge kann beispielsweise als kostengünstiges Kunststoffspritzgussteil ausgebildet sein, wobei hier bei der Herstellung zugleich auch ein Einbetten des Endabscheidermaterials in die aus Kunststoff ausgebildeten Endabscheiderrippen möglich ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Dabei zeigen, jeweils schematisch,

- Fig. 1: einen Längsschnitt durch eine erfindungsgemäße Filtereinrichtung,
- Fig. 2: einen Querschnitt durch eine erfindungsgemäße Filtereinrichtung,
- Fig. 3: einen weiteren Querschnitt durch die erfindungsgemäße Filtereinrichtung.

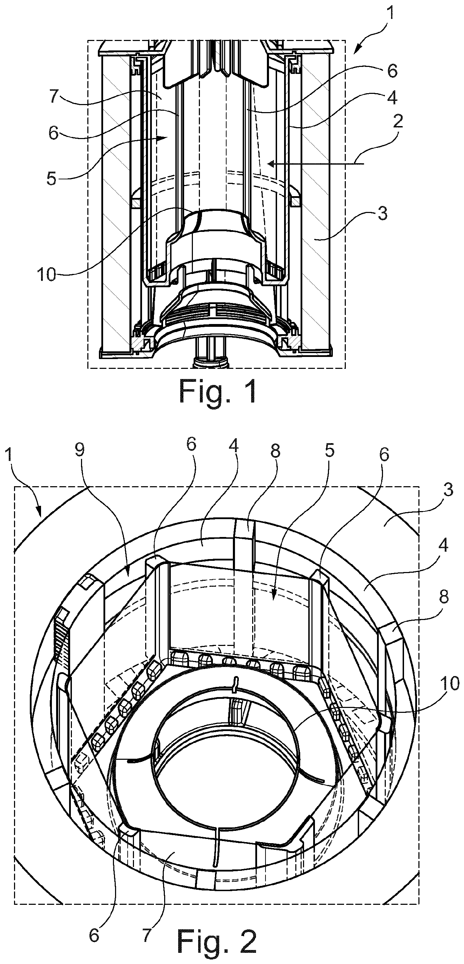

Entsprechend den Fig. 1 bis 3, weist eine erfindungsgemäße Filtereinrichtung 1, welche beispielsweise als Dieselkraftstofffilter oder als Ölfilter ausgebildet sein kann, ein in Strömungsrichtung 2 nacheinander angeordnetes Ringfilterelement 3, einen Coaleszer 4 und einen Endabscheider 5. Der Endabscheider 5 ist dabei radial innerhalb des Coaleszers 4 und radial innerhalb des Ringfilterelements 3 angeordnet, wobei der Coaleszer 4 zudem radial innerhalb des Ringfilterelements 3 angeordnet ist. Erfindungsgemäß ist nun der Endabscheider 5 im Querschnitt eckig ausgebildet, beispielsweise als Sechseck, wie dies gemäß den Fig. 1 bis 3 dargestellt ist, und weist zwischen zwei jeweils benachbarten Endabscheiderrippen 6 ein eben gespanntes Endabscheidermaterial 7 auf.

Der Coaleszer 4 und das Ringfilterelement 3 sind dabei im Querschnitt rund ausgebildet, wobei bei montierter Filtereinrichtung 1 zumindest eine Endabscheiderrippe 6 in Umfangsrichtung zwischen zwei Coaleszerrippen 8 liegt und dadurch ein Abstützen des Coaleszermaterials 9 ermöglicht. Hierdurch können insbesondere ein komplettes Anliegen des Coaleszermaterials 9 am Endabscheidermaterial 7 sowie eine dadurch verursachte Reduzierung der Filterleistung vermieden werden. Durch die das Coaleszermaterial 9 gegebenenfalls abstützenden Endabscheiderrippen 6 kann auch ein zwischen dem Coaleszer 4 und dem Endabscheider 5 gelegener Ringspalt besser aufrechterhalten werden, was sich ebenfalls positiv auf die Filterleistung der erfindungsgemäßen Filtereinrichtung 1 auswirkt.

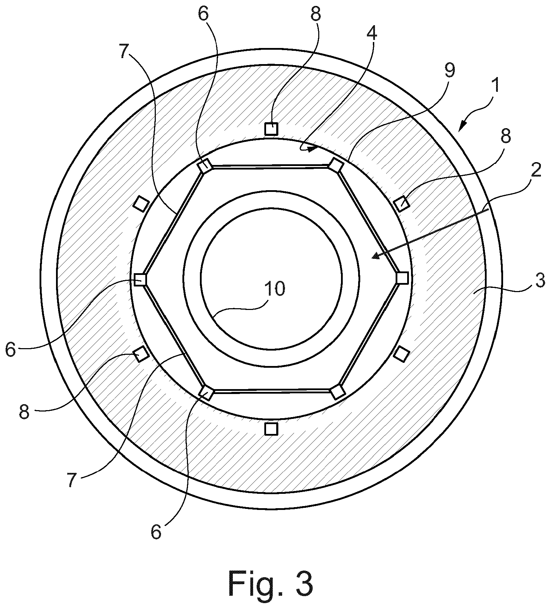

Durch das zwischen zwei Endabscheiderrippen 6 in einer Ebene gespannte Endabscheidermaterial 7 kann auch ein druckbedingtes sich Anlegen des Endabscheidermaterials 7 an einen innen gelegenen Dom bzw. Funktionsträger 10 (vgl. Fig. 3) vermieden werden. Auch hierdurch kann eine verbesserte Filterleistung bzw. Wasserabscheideleistung erzielt werden.

Betrachtet man den erfindungsgemäßen Endabscheider 5 gemäß den Fig. 2 und 3, so kann man erkennen, dass die Endabscheiderrippen 6 an einem Außendurchmesser des Endabscheiders 5 angeordnet sind, so dass bei einem strömungs- bzw. druckbedingten nach innen Verformen des Coaleszermaterials 9 sich dieses zuerst an die Endabscheiderrippen 6 anlegt und nicht wie bislang flächig auf dem Endabscheidermaterial 7aufliegt. In gleicher Weise können auch die Coaleszerrippen 8 an einem Außendurchmesser des Coaleszers 4 angeordnet sein.

Betrachtet man die Fig. 1 bis 3 weiter, so kann man erkennen, dass der Endabscheider 5 als Sechseck ausgebildet ist und sechs Endabscheiderrippen 6 aufweist. Alternativ kann der Endabscheider 5 selbstverständlich auch lediglich vier Endabscheiderrippen 6 oder aber acht, fünf, zwölf oder mehr Endabscheiderrippen 6 aufweisen. Die Ausführungsform mit sechs Endabscheiderrippen 6 bietet dabei einen optimalen Kompromiss zwischen Steifigkeit einerseits und Größe der zur Filtration zur Verfügung stehenden Endabscheiderfläche.

Das Endabscheidermaterial 7 ist dabei beispielsweise als hydrophobes Gewebe ausgebildet, welches Kraftstoff durchlässt, aber Wassertropfen am Durchdringen hindert.

Neben der Filtereinrichtung 1 soll selbstverständlich auch der erfindungsgemäße Endabscheider 5 unter Schutz gestellt sein, der im Querschnitt eckig ausgebildet ist mit zwischen zwei jeweils benachbarten Endabscheiderrippen 6 eben gespanntem Endabscheidermaterial 7. Ein derartiger erfindungsgemäßer Endabscheider 5 kann auch in herkömmlichen Filtereinrichtungen eingesetzt werden, so dass diese mit dem erfindungsgemäßen Endabscheider 5 nachgerüstet werden können. Durch die eckige Form des Endabscheiders 5 sowie ein Stützgitter des Coaleszers 4, zu welchem beispielsweise die Coaleszerrippen 8 gehören, kann der Endabscheider 5 auch bei hohen anliegenden Drücken sicher in Form gehalten werden und das abzuscheidende Wasser kann durch den vorliegenden Spalt zwischen dem Coaleszer 4 und dem Endabscheider 5 in einem darunter angeordneten Wassersammelraum abgeführt werden. Durch die eckige Ausführungsform des Endabscheiders 5 kann darüber hinaus ein Durchbiegen des bislang konvexen Coaleszermaterials 9 vermieden war, da sich dieses auf den Endabscheiderrippen 6 abstützen kann. Hierdurch wird insbesondere verhindert, dass sich das Coaleszermaterial 9 und das Endabscheidermaterial 7 druckbedingt berühren und dadurch kein Spalt mehr für einen Wasserabfluss vorhanden ist.

## Patentansprüche

1. Filtereinrichtung (1), mit einem in Strömungsrichtung (2) nacheinander angeordneten Ringfilterelement (3), einem Coaleszer (4) und einem Endabscheider (5), wobei der Coaleszer (4) radial innerhalb des Ringfilterelements (3) und der Endabscheider (5) radial innerhalb des Coaleszers (4) angeordnet sind, wobei der Endabscheider (5) im Querschnitt eckig ausgebildet ist und zwischen jeweils zwei benachbarten Endabscheiderrippen (6) ein eben gespanntes Endabscheidermaterial (7) aufweist,
**dadurch gekennzeichnet,**
- **dass** an einem Außendurchmesser des Coaleszers (4) Coaleszerrippen 8 angeordnet sind,
- **dass** der Coaleszer (4) und das Ringfilterelement (3) rund ausgebildet sind, wobei bei montierter Filtereinrichtung (1) zumindest eine Endabscheiderrippe (6) in Umfangsrichtung zwischen zwei Coaleszerrippen (8) liegt und dadurch ein Abstützen eines Coaleszermaterials (9) ermöglicht.

2. Filtereinrichtung nach Anspruch 1,
**dadurch gekennzeichnet,**
**dass** die Endabscheiderrippen (6) an einem Außendurchmesser des Endabscheiders (5) angeordnet sind.

3. Filtereinrichtung nach einem der vorangehenden Ansprüche,
**dadurch gekennzeichnet,**
- **dass** der Endabscheider (5) im Querschnitt als Sechseck ausgebildet ist und sechs Endabscheiderrippen (6) aufweist, oder
- **dass** der Endabscheider (5) im Querschnitt als Achteck ausgebildet ist und acht Endabscheiderrippen (6) aufweist.

4. Filtereinrichtung nach einem der vorangehenden Ansprüche,
**dadurch gekennzeichnet,**
**dass** das Endabscheidermaterial (7) ein hydrophobes Gewebe ist.

5. Filtereinrichtung nach einem der vorangehenden Ansprüche,
**dadurch gekennzeichnet,**
**dass** die Filtereinrichtung (1) als Ölfilter oder als Dieselkraftstofffilter ausgebildet ist.

## Claims

1. Filter device (1) having, arranged one after another in flow direction (2), a ring filter element (3), a coalescer (4) and a final separator (5), wherein the coalescer (4) is arranged radially within the ring filter element (3) and the final separator (5) is arranged radially within the coalescer (4), wherein the final separator (5) is designed to be angular in cross-section and has a final separator material (7) which is tensioned flat between in each case two adjacent final separator ribs (6),
**characterised in**
- **that** coalescer ribs (8) are arranged on an outer diameter of the coalescer (4),
- **that** the coalescer (4) and the ring filter element (3) are round in design, wherein, when the filter device (1) is mounted, at least one final separator rib (6) lies in the circumferential direction between two coalescer ribs (8) and thus facilitates a support for a coalescer material (9).

2. Filter device according to claim 1,
**characterised in**
**that** the final separator ribs (6) are arranged on an outer diameter of the final separator (5).

3. Filter device according to any of the preceding claims,
**characterised in**
- **that** the final separator (5) is designed to be hexagonal in cross-section and has six final separator ribs (6), or
- **that** the final separator (5) is designed to be octagonal in cross-section and has eight final separator ribs (6).

4. Filter device according to any of the preceding claims,
**characterised in**
**that** the final separator material (7) is a hydrophobic fabric.

5. Filter device according to any of the preceding claims,
**characterised in**
**that** the filter device (1) is designed as an oil filter or a diesel fuel filter.

## Revendications

1. Dispositif de filtre (1) avec un élément de filtre annulaire (3) agencés dans le sens d'écoulement (2) l'un après l'autre, un coalesceur (4) et un séparateur final (5), dans lequel le coalesceur (4) est agencé radialement à l'intérieur de l'élément de filtre annulaire (3) et le séparateur final (5) est agencé radialement à l'intérieur du coalesceur (4), dans lequel le séparateur final (5) est réalisé de manière anguleuse en section transversale et présente un matériau de séparateur final (7) serré de manière plane entre respectivement deux nervures de séparateur final (6) contigües,
**caractérisé en ce**
- **que** des nervures de coalesceur (8) sont agencées au niveau d'un diamètre extérieur du coalesceur (4),
- **que** le coalesceur (4) et l'élément de filtre annulaire (3) sont réalisés de manière ronde, dans lequel en cas de Dispositif de filtre (1) monté, au moins une nervure de séparateur final (6) se trouve dans le sens périphérique entre deux nervures de coalesceur (8) et permet ainsi un appui d'un matériau de coalesceur (9).

2. Dispositif de filtre selon la revendication 1,
**caractérisé en ce**
**que** les nervures de séparateur final (6) sont agencées au niveau d'un diamètre extérieur du séparateur final (5).

3. Dispositif de filtre selon l'une des revendications précédentes,
**caractérisé en ce**
- **que** le séparateur final (5) est réalisé en section transversale comme hexagone et présente six nervures de séparateur final (6), ou
- **que** le séparateur final (5) est réalisé en section transversale comme octogone et présente huit nervures de séparateur final (6).

4. Dispositif de filtre selon l'une des revendications précédentes,
**caractérisé en ce**
**que** le matériau de séparateur final (7) est un tissu hydrophobe.

5. Dispositif de filtre selon l'une des revendications précédentes,
**caractérisé en ce**
**que** le dispositif de filtre (1) est réalisé comme filtre à huile ou comme filtre à carburant diesel.
